# EUROPÄISCHE PATENTSCHRIFT

(11) **EP 1 147 296 B1**
(45) Veröffentlichungstag und Bekanntmachung des Hinweises auf die Patenterteilung: **07.05.2003**
(21) Anmeldenummer: 00903623.7
(22) Anmeldetag: 25.01.2000
(51) Int. Cl.: F01M 11/00, F16J 15/14

(54) **VERFAHREN ZUM ANBRINGEN DER ÖLWANNE ODER DES VENTILDECKELS AN EINEN MOTORBLOCK ODER EINES DECKELS AN EINEM STEUERGEHÄUSE ODER GETRIEBE EINER VERBRENNUNGSKRAFTMASCHINE,VERBRENNUNGSKRAFTMASCHINE, BEI DER DIE ÖLWANNE, DER VENTILDECKEL ODER DER DECKEL DES STEUERGEHÄUSES ODER GETRIEBES AUF DIESE WEISE ANGEBRACHT WURDE.**
METHOD FOR MOUNTING THE OIL PAN OR THE VOLVE COVER ON AN ENGINE BLOCK OR A COVER ON A CONTROL HOUSING OR TRANSMISSION OF AN INTERNAL COMBUSTION ENGINE, INTERNAL COMBUSTION ENGINE IN WHICH THE OIL PAN, THE VALVE COVER OR THE COVER OF THE CONTROL HOUSING OR THE TRANSMISSION IS FASTENED ACCORDING TO SAID METHOD
PROCEDE POUR MONTER LE CARTER D'HUILE OU LE COUVERCLE DE SOUPAPE SUR UN BLOC MOTEUR OU UN COUVERCLE D UN BOITIER DE COMMANDE OU D UN CARTER DE BOITE DE VITESSE D UN MOTEUR A COMBUSTION INTERNE, MOTEUR A COMBUSTION INTERNE SUR LEQUEL LE CARTER D'HUILE, LE COUVERCLE DE SOUPAPE OU LE COUVERCLE DU BOITIER DE COMMANDE OU DU CARTER DE BOITE DE VITESSE EST FIXE SELON CE PROCEDE

(30) Priorität: 25.01.1999 DE 19902817
(43) Veröffentlichungstag der Anmeldung: 24.10.2001
(73) Patentinhaber: Henkel Loctite Deutschland GmbH, 81925 München (DE)
(72) Erfinder: RITTER, Karl-Heinz, D-80937 München (DE); SCHMATZ, Thomas Martin, D-80997 München (DE)
(74) Vertreter: Gritschneder, Martin, Dipl.-Phys.
(86) Internationale Anmeldenummer: EP0000536
(87) Internationale Veröffentlichungsnummer: WO00043644

(56) Entgegenhaltungen:
- EP-A- 0 409 079
- EP-A- 0 558 033
- WO-A-92/07896
- WO-A-97/17535
- DE-A- 4 103 685
- DE-A- 4 439 186
- PATENT ABSTRACTS OF JAPAN vol. 007, no. 275 (M-261), 8. Dezember 1983 (1983-12-08) & JP 58 152151 A (DAIHATSU KOGYO KK), 9. September 1983 (1983-09-09)

## Beschreibung

Die Erfindung betrifft ein Verfahren zum Anbringen der Ölwanne an einem Motorblock einer Verbrennungskraftmaschine, wobei eine Abdichtung zwischen einer ersten Dichtfläche an der Ölwanne und einer zweiten Dichtfläche am Motorblock hergestellt wird, wozu die aushärtbare Zusammensetzung auf eine oder auf beide Dichtflächen aufgetragen wird. Die Erfindung betrifft ferner eine Verbrennungskraftmaschine mit einem Motorblock und einer daran befestigten Ölwanne, wobei an der Ölwanne eine erste Dichtfläche und am Motorblock eine zweite Dichtfläche vorhanden ist, zwischen denen sich eine aushärtbare Zusammensetzung befindet.

Ein solches Verfahren und eine solche Brennkraftmaschine bzw. Flanschverbindung ist aus PATENT ABSTRACTS OF JAPAN vol. 007, no. 275 (M-261) (= JP 58152151 A) bekannt. Die eigentliche Befestigung der Ölwanne erfolgt hierbei in herkömmlicher Weise mittels Gewindebolzen.

Aus DE-A-41 03 685 ist eine Brennkraftmaschine bekannt, bei der die Ölwanne mittels eines im ausgehärteten Zustand dauerelastischen Klebers mit dem Motorblock verbunden ist. Zwischen dem Motorblock und der Ölwanne ist ein Adapter als stabiles Formteil vorgesehen und der Adapter weist einen den Kleber zum Motorinneren abstützenden vertikalen Steg auf. Die Anordnung aus Ölwanne, Kleber und Formteil wird nach dem Aushärten des Klebers in herkömmlicher Weise durch Schrauben und Dichtungen am Motorblock befestigt.

Aus EP-A-0 284 027 ist eine anaerobisch vulkanisierte Dichtungszusammensetzung bekannt, sowie deren Anwendung auf Teile von hydraulisch gesteuerten Vorrichtungen und Verbrennungsmotoren, wie die Verbindung zwischen einem Flanschteil an einer ölwanne und einem Motorblock, einer Verbindung zwischen Zylinderkopf und Zylinderkopfdeckel und einer Verbindung am Getriebe. Wie insbesondere die Erwähnung als Abdichtung der Verbindung zwischen Zylinderkopf und Zylinderkopfdeckel zeigt, werden hier zusätzlich Schrauben als Befestigungselemente eingesetzt.

Aus EP-A-0 409 079 ist ein Verfahren zum Herstellen von Polysiloxandichtungen bekannt, wobei als Anwendungsbeispiel das Herstellen einer Dichtung auf dem Flansch einer Kraftfahrzeug-Ölwanne angegeben ist. In der dazugehörenden Zeichnung sind im Flansch der Ölwanne Öffnungen für die Befestigungsbolzen vorgesehen, so daß offensichtlich auch hier die Befestigungsbolzen als Verbindungselemente eingesetzt werden.

Auch bei einem bekannten Verfahren wird die Ölwanne in herkömmlicher Weise durch Schrauben am Motorblock gehalten. Dazu muß der Motorblock mit einer Mehrzahl von Gewindebohrungen versehen werden und muß dann eine entsprechende Anzahl von Schrauben eingedreht werden.

Der Erfindung liegt die Aufgabe zu Grunde, diese Arbeitsgänge und Bauteile einzusparen.

Erfindungsgemäß wird diese Aufgabe dadurch gelöst, daß die Adhäsion der aushärtbaren Zusammensetzung im ausgehärteten Zustand ausreichend groß ist, um die Ölwanne am Motorblock zu halten und daß keine Gewindebolzen als Befestigungselemente eingesetzt werden. Bei dem erfindungsgemäßen Verfahren kommt hinzu, daß die Ölwanne zumindest während des Aushärtens der Zusammensetzung an dem Motorblock fixiert wird.

Es hat sich gezeigt, daß die Adhäsion von aushärtbaren Zusammensetzungen oder Klebstoffen ausreicht, um eine Ölwanne dauerhaft und sicher an einem Motorblock zu befestigen. Vorzugsweise wird ein Klebstoff mit einer Adhäsion von mindestens 0,5 N/mm², insbesondere von mehr als 0,8 N/mm², verwendet.

Bei der erfindungsgemäßen Befestigung der Ölwanne am Motorblock erübrigen sich die Gewindebohrungen im Motorblock und entfällt das Eindrehen der Befestigungsschrauben. Die Ölwanne kann einfach aus Stahlblech gestanzt werden. Eine maschinelle Bearbeitung, z.B. ein Planschleifen oder -fräsen der Dichtflächen am Motorblock und an der Ölwanne ist nicht erforderlich, da die aushärtbare Zusammensetzung Unebenheiten bis zu 0,5 mm oder sogar 1 mm ausgleichen kann. Die maximal zulässige Unebenheit wird dadurch begrenzt, daß bei größeren Lücken zwischen Motorblock und Ölwanne die Gefahr besteht, daß die aushärtbare Zusammensetzung beim allgemein üblichen Dichtheitstest durch Abdrücken mit Luft (Ausblastest) des fertig zusammengebauten Motors ausgeblasen wird. Für den Zusammenbau des Motors werden etwa 30 min benötigt und die Zusammensetzung kann innerhalb dieser Zeitspanne nicht ausreichend aushärten, um bei größeren Schichtdicken dem beim Dichtheitstest aufgebrachten Überdruck von etwa 0,5 bar standzuhalten, insbesondere wenn die Aushärtezeit von der Schichtdicke abhängt wie bei Silikon-Klebstoffen, die durch die Luftfeuchtigkeit aushärten.

Daß die Befestigungsschrauben für die Ölwanne entfallen, ergibt eine Kostenreduzierung infolge Verringerung der Anzahl der Bauteile, Verkürzung der Montagezeit und Vereinfachung der Herstellung des Motorblocks durch Wegfall der Gewindebohrungen. Ferner ergibt sich eine Gewichtsreduzierung. Weiter Kostenvorteile ergeben sich daraus, daß die Ölwanne ein Stanzteil sein kann.

Die aushärtbare Zusammensetzung kann jeder Klebstoff sein, der für die Werkstoffe geeignet ist und der bei den Werkstoffen eine ausreichende Adhäsion besitzt, aus denen der Motorblock und die Ölwanne bestehen, also Metall, insbesondere Grauguß, Aluminium-Magnesium-Legierungen und - für die Ölwanne - Kunststoff. Selbstverständlich muß die Zusammensetzung ausreichend gegen die verwendeten Medien (Öl, Wasser-Glykol, Frostschutzmittel) beständig sein. Geeignet sind insbesondere FIP(formed in place)-Produkte. Eine geeignete aushärtbare Zusammensetzung ist insbesondere LOCTITE® RTV Silikon 5900 (RTV=room temperature vulcanization).

Da derartige Zusammensetzungen Aushärtezeiten von bis zu einigen Tagen haben, ist es im allgemeinen notwendig, die Ölwanne während dieser Zeit durch eine selbstfixierende Verbindung am Motorblock zu befestigen. Geeignet sind hierfür Klammern und Schnappverbindungen. Der Rand der Ölwanne kann z.B. an einem Flansch des Motorblocks einschnappen oder an diesem Rand können einzelne Haltefinger vorgesehen sein, die um den Flansch des Motorblocks gebogen werden. Der Rand der Ölwanne kann auch um den Flansch am Motorblock gecrimpt oder gebördelt werden. Da diese Fixierungsmittel nur bis zum Aushärten der aushärtbaren Zusammensetzung notwendig sind, können sie danach gegebenenfalls wieder entfernt und wiederverwendet werden.

Vorzugsweise sind die Dichtflächen am Motorblock und an der Ölwanne so geformt, daß sich eine über die Breite der Dichtflächen ungleichmäßige Schichtdicke ergibt. Der Rand einer oder beider Dichtflächen kann dazu eine Fase mit einem Winkel von z.B. 30° und einer Breite von etwa 2 mm haben oder mit einem Radius von etwa 4,5 mm abgerundet sein, wobei der gebildete Spalt von der aushärtbaren Zusammensetzung ganz oder teilweise ausgefüllt wird. Die aushärtbare Zusammensetzung wird in bekannter Weise aufgetragen. Das Volumen des Spaltes soll dabei größer sein als die aufgetragene Menge der aushärtbaren Zusammensetzung, damit nichts von der aushärtbaren Zusammensetzung an den Rändern herausgepreßt wird. Die maximale Größe des Spaltes soll so gewählt werden, daß die Benetzung oder Adhäsion der frisch aufgetragenen Zusammensetzung ausreicht, um die Zusammensetzung im Spalt zurückzuhalten. Die aushärtbare Zusammensetzung braucht nicht auf die volle Breite der Dichtflächen aufgetragen oder verteilt zu werden. Ein lückenloser Auftrag in Form einer Raupe genügt. Bei entsprechender Flanschgeometrie kann der Auftrag z.B. auch an der Randfläche des Flansches des Motorblocks erfolgen, d.h. an einer Fläche, die parallel zu Richtung des Zusammenbaus von Ölwanne und Motorblock liegt.

Das erfindungsgemäße Verfahren ist insbesondere für Fälle geeignet, in denen die Ölwanne nicht zur Gesamtsteifigkeit des Motors oder der sonstigen Maschine beitragen muß.

Die Vorteile der Erfindung kommen beim Befestigen einer Ölwanne am Motorblock eines Verbrennungsmotors besonders deutlich zum Tragen. Das erfindungsgemäße Verfahren eignet sich in gleicher Weise z.B. auch für das Anbringen von Ventildeckeln und von Abdeckungen oder Deckel an Steuergehäusen oder Getrieben.

Ein Ausführungsbeispiel der Erfindung wird nachfolgend anhand der Zeichnung näher erläutert. Es zeigen:
- Fig. 1: im Schnitt den Rand der Ölwanne und der Ölwannenöffnung des Motorblocks mit einer ersten Ausführungsform des Fixiermittels und
- Fig. 2 bis 4: im Schnitt der Rand der Ölwanne mit anderen Ausführungsformen des Fixiermittels.

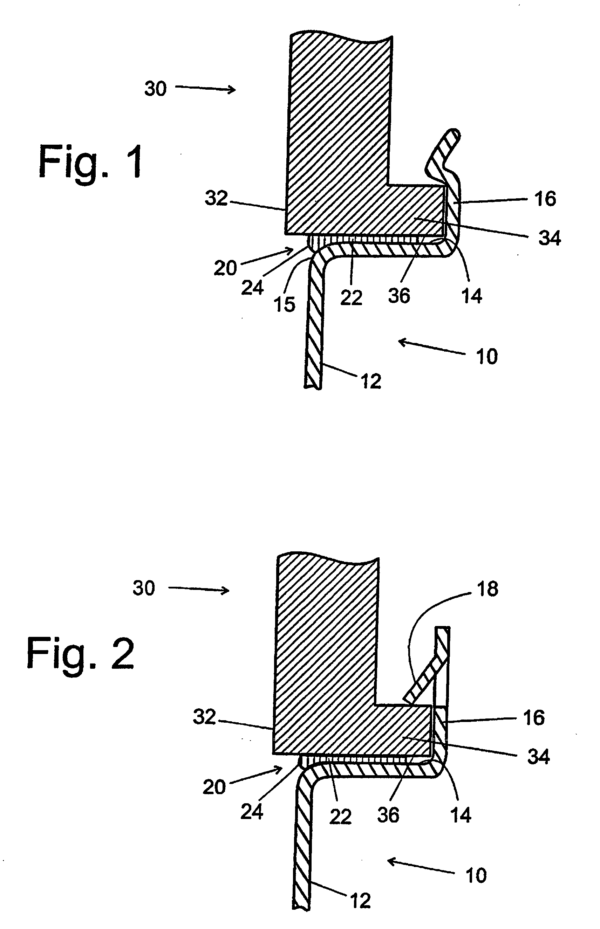

Fig. 1 zeigt eine Ölwanne 10, die mittels einer aushärtbaren Zusammensetzung 20 an einem Motorblock 30 befestigt ist. Der Rand 12 der Ölwanne 10 ist zu einer im wesentlichen ebenen ersten Dichtfläche 14 umgebogen (Umbiegung 15). Der Motorblock 30 hat eine Ölwannenöffnung 32, die von einem Flansch 34 umgeben wird, der eine im wesentlichen ebene zweite Dichtfläche 36 aufweist. Zwischen den beiden Dichtflächen 14, 36 befindet sich eine Schicht 22 der aushärtbaren Zusammensetzung 20.

Die Umbiegung 15 des Randes 12 der Ölwanne 10 hat einen Radius von etwa 4,5 mm, so daß sich der Abstand der Dichtflächen 14, 36 von der Innenseite der Ölwanne 10 her fortschreitend verringert. Die Stärke der sich zwischen den Dichtflächen 14, 36 befindenden Schicht 22 der aushärtbaren Zusammensetzung 20 ist daher nicht gleichförmig, sondern ist auf der Innenseite der ölwanne 10 am größten und verringert sich nach außen.

Am äußeren Rand der Dichtfläche 14 der Ölwanne 10 ist ein Fixierrand 16 angebogen, der den Flansch 34 des Motorblocks 30 soweit umgreift, däß die Ölwanne während der weiteren Montage des Motors und des Kraftfahrzeugs am Motorblock 30 fixiert ist. Der Fixierrand 16 schnappt oder rastet um den Flansch 34 ein, wenn die Ölwanne 10 gegen den Flansch 34 gedrückt wird.

Der Fixierrand 16 bildet zugleich später im Betrieb des Kfz eine Sicherung gegen ein Lösen der Ölwanne 10 vom Motorblock 30 bei einem Unfall oder einer sonstigen stoßartigen Belastung.

Fig. 2 zeigt eine andere Möglichkeit für die Fixierung der Ölwanne 10 am Motorblock 30. Ähnlich wie in Fig. 1 ist ein Fixierrand 16 vorgesehen, wobei hier jedoch widerhakenähnliche Zungen 18 aus dem Fixierrand 16 herausgedrückt sind, die sich gegen die Oberseite des Flansches 34 abstützen.

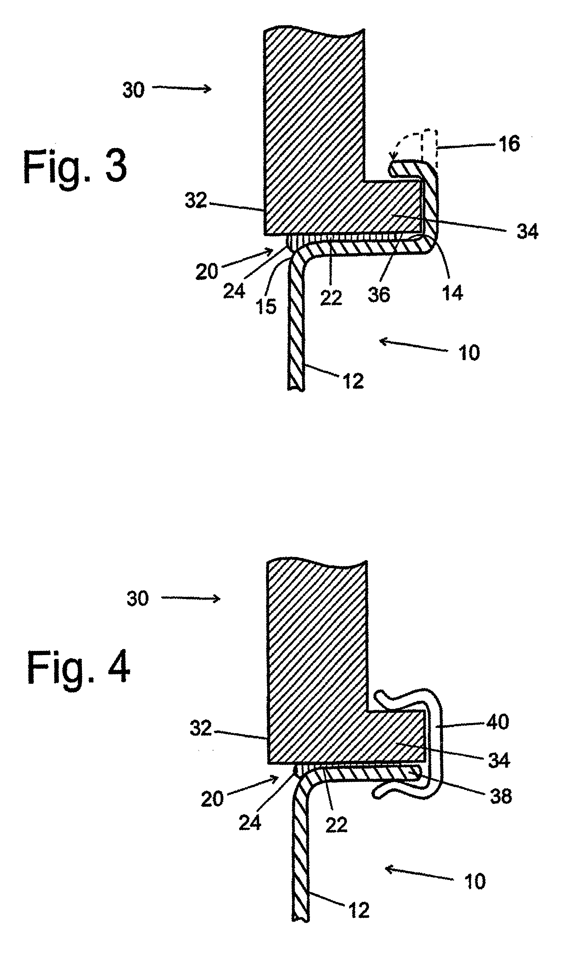

Fig. 3 zeigt eine Fixierung der Ölwanne 10 am Motorblock 30, bei der der Fixierrand 16 der Ölwanne 10 nach dem Auftragen der aushärtbaren Zusammensetzung 20 und dem Fügen der Ölwanne 10 und des Motorblocks 30 umgeformt wird, so daß er den Flansch 34 umgreift. Diese Umformung braucht sich nicht über den gesamten Rand 16 der Ölwanne 10 zu erstrecken. Es genügt im allgemeinen eine stellenweise Fixierung im Abstand von z.B. 20 cm.

Fig. 4 zeigt eine Ausführungsform, bei der der Rand 16 der Ölwanne 10 einen nach außen gerichteten Flansch 38 bildet. Nach dem Auftragen der aushärtbaren Zusammensetzung 20 und dem Fügen der Ölwanne 10 und des Motorblocks 30 werden Klammern 40 aufgesteckt, die während des Aushärtens der Zusammensetzung 20 die Ölwanne 10 am Flansch 34 des Motorblocks 30 halten.

### Beispiel :

Zum Zusammenfügen einer aus Stahlblech gestanzten Ölwanne 10 und eines Gußstahl-Motorblocks 30 werden die Dichtflächen 14, 36 von losen Schmutzteilchen gereinigt und getrocknet. Die Dichtflächen 14, 36 haben eine Überdeckungsbreite von etwa 9 mm und auf eine oder auf beide Dichtflächen 14, 36 wird eine Raupe von etwa 3 mm Durchmesser der aushärtbaren Zusammensetzung 20 aufgetragen, was etwa 10 g/m entspricht. Als aushärtbare Zusammensetzung 20 wird LOCTITE® RTV-Silikon 5900 eingesetzt. Die Ölwanne 10 wird dann auf den Flansch 34 des Motorblocks 30 aufgerückt, so daß der Fixierrand 16 um den Flansch 34 schnappt. Die Raupe der aushärtbaren Zusammensetzung 20 wird dabei zu einer Schicht 22 von etwa 0,5 mm Stärke auseinandergedrückt und ein Teil der Zusammensetzung 20 wird nach innen zur Umbiegung 15 des Randes 12 gedrückt, wo die Zusammensetzung 20 einen Meniskus 24 zwischen der ölwanne 10 und dem Flansch 34 des Motorblocks 30 bildet. Wegen der hohen Viskosität der aushärtbaren Zusammensetzung 20 ist der Meniskus 24 konvex.

### Bezugszeichenliste

- 10: Ölwanne
- 12: Rand
- 14: Dichtfläche
- 15: Umbiegung
- 16: Fixierrand
- 18: Zungen
- 20: Zusammensetzung
- 22: Schicht
- 24: Meniskus
- 30: Motorblock
- 32: Ölwannenöffnung
- 34: Flansch
- 36: Dichtfläche
- 38: Flansch
- 40: Klammer

## Patentansprüche

1. Verfahren zum Anbringen der Ölwanne (10) oder des Ventildeckels an einen Motorblock (30) oder eines Deckels an einem Steuergehäuse oder Getriebe einer Verbrennungskraftmaschine, wobei mittels einer aushärtbaren Zusammensetzung (20) eine Abdichtung zwischen einer ersten Dichtfläche (14) an der Ölwanne (10) oder dem Deckel und einer zweiten Dichtfläche (36) am Motorblock (30) bzw. Steuergehäuse oder Getriebe hergestellt wird, wozu die aushärtbare Zusammensetzung auf eine oder auf beide Dichtflächen (14, 36) aufgetragen wird, **dadurch gekennzeichnet,**
- **daß** die Adhäsion der aushärtbaren Zusammensetzung (20) im ausgehärteten Zustand ausreichend groß ist, um die Ölwanne (10) am Motorblock (30) bzw. den Deckel am Steuergehäuse oder Getriebe zu halten,
- **daß** keine Gewindebolzen als Befestigungselemente eingesetzt werden und
- **daß** die Ölwanne (10) oder der Deckel zumindest während des Aushärtens der Zusammensetzung (20) an dem Motorblock (30) bzw. dem Steuergehäuse oder Getriebe fixiert wird.

2. Verfahren nach Anspruch 1, **dadurch gekennzeichnet, daß** eine aushärtbare Zusammensetzung (20) mit einer Adhäsion von mindestens 0,5 N/mm², insbesondere von mehr als 0,8 N/mm², verwendet wird.

3. Verfahren nach Anspruch 1 oder 2, **dadurch gekennzeichnet, daß** die aushärtbare Zusammensetzung (20) eine Silikon-Masse ist.

4. Verfahren nach einem der Ansprüche 1 bis 3, **dadurch gekennzeichnet, daß** eine aus Stahlblech gestanzte oder Kunststoff hergestellte Ölwanne (10) und ein Aluminiumoder Grauguß-Motorblock (30) eingesetzt werden.

5. Verfahren nach einem der Ansprüche 1 bis 4, **dadurch gekennzeichnet, daß** der Rand der Ölwanne bzw. des Deckels konstruktiv so ausgelegt ist, daß beim Fügen der Ölwanne (10) an den Motorblock (30) bzw. des Deckels an dem Steuergehäuse oder Getriebe eine selbständige Fixierung erfolgt.

6. Verfahren nach Anspruch 5, **dadurch gekennzeichnet, daß** die Ölwanne (10) oder der Deckel einen Fixierrand (16) und der Motorblock (30) bzw. das Steuergehäuse oder Getriebe einen Flansch (34) aufweist und daß die Fixierung der Ölwanne oder des Deckels (10) dadurch erfolgt, daß der Fixierrand (16) an dem Flansch (34) einschnappt.

7. Verfahren nach einem der Ansprüche 1 bis 4, **dadurch gekennzeichnet, daß** am Rand (12) der Ölwanne (10) bzw. des Deckels widerhakenähnliche Zungen (18) ausgebildet sind, die sich gegen einen Flansch (34) am Motorblock (30) bzw. Steuergehäuse oder Getriebe abstützen.

8. Verfahren nach einem der Ansprüche 1 bis 4, **dadurch gekennzeichnet, daß** der Rand der Ölwanne oder des Deckels so ausgeführt ist, daß die Ölwanne (10) oder der Deckel durch ein nach dem Fügen erfolgendes Umformverfahren an dem Motorblock (30) bzw. Steuergehäuse oder Getriebe fixierbar ist.

9. Verfahren nach einem der Ansprüche 1 bis 4, **dadurch gekennzeichnet, daß** nach dem Fügen der Ölwanne (10) oder des Deckels an den Motorblock (30) bzw. das Steuergehäuse oder Getriebe Halteklammern (40) angebracht werden, um die Ölwanne (10) oder den Deckel an dem Motorblock (30) bzw. Steuergehäuse oder Getriebe zu fixieren.

10. Verfahren nach einem der Ansprüche 1 bis 9, **dadurch gekennzeichnet, daß** die Dichtflächen (14, 36) so geformt sind, daß sich der zwischen ihnen gebildete Dichtspalt nach innen vergrößert.

11. Verbrennungskraftmaschine mit einem Motorblock (30) und einer daran befestigten Ölwanne (10), wobei an der Ölwanne (10) eine erste Dichtfläche (14) und am Motorblock (30) eine zweite Dichtfläche (36) vorhanden ist, zwischen denen sich eine aushärtbare Zusammensetzung (20) befindet, **dadurch gekennzeichnet,**
- **daß** die Ölwanne (10) mittels der aushärtbaren Zusammensetzung (20) an dem Motorblock (30) befestigt ist, deren Adhäsion im ausgehärteten Zustand ausreichend groß ist, um die Ölwanne (10) am Motorblock (30) zu halten und
- **daß** keine Gewindebolzen als Befestigungselemente vorhanden sind.

12. Verbrennungskraftmaschine mit einem Steuergehäuse oder Getriebe und einem daran befestigten Deckel, wobei an dem Deckel eine erste Dichtfläche und am Steuergehäuse oder Getriebe eine zweite Dichtfläche vorhanden ist, zwischen denen sich eine aushärtbare Zusammensetzung befindet, **dadurch gekennzeichnet,**
- **daß** der Deckel mittels der aushärtbaren Zusammensetzung an dem Steuergehäuse oder Getriebe befestigt ist, deren Adhäsion im ausgehärteten Zustand ausreichend groß ist, um den Deckel am Steuergehäuse oder Getriebe zu halten und
- **daß** keine Gewindebolzen als Befestigungselemente vorhanden sind.

13. Verbrennungskraftmaschine nach Anspruch 11 oder 12, **dadurch gekennzeichnet, daß** die Zusammensetzung (20) im ausgehärteten Zustand eine Adhäsion von mindestens 0,5 N/mm², insbesondere von mehr als 0,8 N/mm², hat.

14. Verbrennungskraftmaschine nach Anspruch 11, 12 oder 13, **dadurch gekennzeichnet, daß** die aushärtbare Zusammensetzung (20) eine Silikon-Masse ist.

15. Verbrennungskraftmaschine nach einem der Ansprüche 11, 13 oder 14, **dadurch gekennzeichnet, daß** die Ölwanne (10) aus Stahlblech gestanzt oder aus Kunststoff hergestellt ist und der Motorblock (30) aus Aluminium- oder Grauguß besteht.

16. Verbrennungskraftmaschine nach einem der Ansprüche 11 bis 15, **dadurch gekennzeichnet, daß** der Rand der Ölwanne bzw. des Deckels konstruktiv so ausgelegt ist, daß beim Fügen der Ölwanne (10) oder des Deckels an den Motorblock (30) bzw. das Steuergehäuse oder Getriebe eine selbständige Fixierung erfolgt.

17. Verbrennungskraftmaschine nach Anspruch 16, **dadurch gekennzeichnet, daß** die Ölwanne (10) bzw. der Deckel einen Fixierrand (16) und der Motorblock (30) bzw. das Steuergehäuse oder Getriebe einen Flansch (34) aufweist und daß die Fixierung der Ölwanne (10) bzw. des Deckels dadurch erfolgt, daß der Fixierrand (16) an dem Flansch (34) einschnappt.

18. Verbrennungskraftmaschine nach Anspruch 16, **dadurch gekennzeichnet, daß** am Rand (12) der Ölwanne (10) bzw. des Deckels widerhakenähnliche Zungen (18) ausgebildet sind, die sich gegen einen Flansch (34) am Motorblock (30) bzw. Steuergehäuse oder Getriebe abstützen.

19. Verbrennungskraftmaschine nach Anspruch 16, **dadurch gekennzeichnet, daß** an der Ölwanne (10) oder dem Deckel und an dem Motorblock (30) bzw. Steuergehäuse oder Getriebe Dichtflächen (14, 36) ausgebildet sind, die so geformt sind, daß sich der zwischen ihnen gebildete Dichtspalt nach innen vergrößert.

## Claims

1. Process for attaching the oil sump (10) or the valve cover to an engine block (30) or a cover to a timing case or a gear box of a combustion engine, a seal being made by means of a curable composition (20) between a first sealing surface (14) on the oil sump (10) or the cover and a second sealing surface (36) on the engine block (30) or, respectively, the timing case or gear box for which the curable composition is applied to one or to both sealing surfaces (14, 36), **characterized**
- **in that** the adhesion of the curable composition (20), when cured, is sufficient to secure the oil sump (10) to the engine block (30) or, respectively, the cover to the timing case or gear box,
- **in that** threaded bolts are not used as fastening elements and
- **in that** the oil sump (10) or the cover is fixed to the engine block (30) or, respectively, the timing case or gear box at least during the curing of the composition (20).

2. Process according to claim 1, **characterized in that** a curable composition (20) with an adhesion of at least 0.5 N/mm², especially of more than 0.8 N/mm², is used.

3. Process according to claims 1 or 2, **characterized in that** the curable composition (20) is a silicone composition.

4. Process according to one of claims 1 to 3, **characterized in that** an oil sump (10) stamped from steel sheet or made from plastics material and a cast aluminum or grey cast iron engine block (30) are used.

5. Process according to one of claims 1 to 4, **characterized in that** the edge of the oil sump or, respectively, the cover is designed such that a self-fixing takes place when the oil sump (10) is joined to the engine block (30) or, respectively, the cover to the timing case or the gear box.

6. Process according to claim 5, **characterized in that** the oil sump (10) or the cover has a fixing edge (16) and the engine block (30) or, respectively, the timing case or the gear box has a flange (34) and **in that** the fixing of the oil sump (10) or the cover takes place by the snapping of the fixing edge (16) onto the flange (34).

7. Process according to one of claims 1 to 4, **characterized in that** barb-like tongues (18) which rest against a flange (34) on the engine block (30) or, respectively, the timing case or the gear box are formed at the edge (12) of the oil sump (10) or, respectively, the cover.

8. Process according to one of claims 1 to 4, **characterized in that** the edge of the oil sump or the cover is designed such that the oil sump (10) is fixable to the engine block (30) or, respectively, the timing case or the gear box by a reshaping process taking place after joining.

9. Process according to one of claim 1 to 4, **characterized in that** after the oil sump (10) or the cover has been joined to the engine block (30) or, respectively, the timing case or the gear box, holding clamps (40) are attached in order to fix the oil sump (10) or the cover to the engine block (30) or, respectively, the timing case or the gear box.

10. Process according to one of the claims 1 to 9, **characterized in that** the sealing surfaces (14, 36) are shaped such that the sealing gap formed between them increases in size inwards.

11. Combustion engine comprising an engine block (30) and an oil sump (10) attached thereto, a first sealing surface (14) being present on the oil sump (10) and a second sealing surface (36) being present on the engine block (30) between which is a curable composition (20), **characterized**
- **in that** the oil sump (10) is attached to the engine block (30) by means of the curable composition (20) whose adhesion when cured is sufficient to secure the oil sump (10) to the engine block (30) and
- **in that** threaded bolts are not present as fastening elements.

12. Combustion engine comprising a timing case or a gear box and a cover attached thereto, a first sealing surface being present on the cover and a second sealing surface being present on the timing case or the gear box between which is a curable composition, **characterized**
- **in that** the cover is attached to the timing case or the gear box by means of the curable composition whose adhesion when cured is sufficient to secure the cover to the timing case or the gear box and
- **in that** threaded bolts are not present as fastening elements.

13. Combustion engine according to claim 11 or 12, **characterized in that** the composition (20) when cured has an adhesion of at least 0.5 N/mm², especially of more than 0.8 N/mm²

14. Combustion engine according to claims 11, 12 or 13, **characterized in that** the curable composition (20) is a silicone composition.

15. Combustion engine according to one of claims 11, 13 or 14, **characterized in that** the oil sump (10) is stamped from sheet steel or made from plastics material and the engine block (30) consists of cast aluminum or grey cast iron.

16. Combustion engine according to one of claims 11 to 15, **characterized in that** the edge of the oil sump or, respectively, the cover is designed such that a self-fixing takes place when the oil sump (10) or the cover is joined to the engine block (30) or, respectively, the timing case or the gear box.

17. Combustion engine according to claim 16, **characterized in that** the oil sump (10) or, respectively, the cover has a fixing edge (16) and the engine block (30) or, respectively, the timing case or the gear box has a flange (34) and **in that** the fixing of the oil sump (10) or, respectively, the cover takes place by the snapping of the fixing edge (16) onto the flange (34).

18. Combustion engine according to claim 16, **characterized in that** barb-like tongues (18) which rest against a flange (34) on the engine block (30) or, respectively, the timing case or the gear box are formed at the edge (12) of the oil sump (10) or, respectively, the cover.

19. Combustion engine according to claim 15, **characterized in that** there are formed on the oil sump (10) or the cover and on the engine block (30) or, respectively, the timing case or the gear box sealing surfaces (14, 36) which are shaped such that the sealing gap formed between them increases in size inwards.

## Revendications

1. Procédé pour monter le carter d'huile (10) ou le cache-soupape sur un bloc moteur (30) ou un couvercle sur un carter de direction ou la transmission d'un moteur à combustion interne, un joint d'étanchéité étant réalisé au moyen d'une composition durcissable (20) entre une première surface d'étanchéité (14) sur le carter d'huile (10) ou le couvercle et une seconde surface d'étanchéité (36) sur le bloc moteur (30) et respectivement le carter de direction ou la transmission, la composition durcissable étant appliquée à cet effet sur l'une des surfaces d'étanchéité ou bien sur les deux (14,36), **caractérisé en ce**
- **que** l'adhésion de la composition durcissable (20) une fois durcie est suffisamment importante pour maintenir le carter d'huile (10) sur le bloc moteur et respectivement le couvercle sur le carter de direction ou la transmission,
- **qu'**aucun boulon fileté n'est mis en place en tant que moyen de fixation et
- **que** le carter d'huile (10) ou le couvercle sont fixés sur le bloc moteur (30) et respectivement le carter de direction ou la transmission au moins pendant la phase de durcissement de la composition (20).

2. Procédé selon la revendication 1, **caractérisé en ce qu'**une composition durcissable (20) offrant une adhésion d'au moins 0,5 N/mm², en particulier supérieure à 0,8 N/mm², est utilisée.

3. Procédé selon la revendication 1 ou 2, **caractérisé en ce que** la composition durcissable (20) est une masse de silicone.

4. Procédé selon l'une des revendications 1 à 3, **caractérisé en ce qu'**un carter d'huile (10) formé à partir de tôle d'acier ou bien en plastique et un bloc moteur (30) en fonte d'aluminium ou en fonte grise sont utilisés.

5. Procédé selon l'une des revendications 1 à 4, **caractérisé en ce que** la bordure du carter d'huile ou du couvercle est conçue sur le plan constructif de telle façon que, lors de l'assemblage du carter d'huile (10) sur le bloc moteur (30) et respectivement du couvercle sur le carter de direction ou la transmission, il se produit une fixation spontanée.

6. Procédé selon la revendication 5, **caractérisé en ce que** le carter d'huile (10) ou le couvercle présente une bordure de fixation (16) et le bloc moteur (30) et respectivement le carter de direction ou la transmission présente une flasque, et **en ce que** la fixation du carter d'huile ou du couvercle (10) s'effectue par enclenchement de la bordure de fixation (16) sur la bride (34).

7. Procédé selon l'une des revendications 1 à 4, **caractérisé en ce que** sur la bordure (12) du carter d'huile (10) et respectivement du couvercle sont formées des languettes (18) analogues à des barbes, lesquelles prennent appui contre une bride (34) sur le bloc moteur (34) et respectivement le carter de direction ou la transmission.

8. Procédé selon l'une des revendications 1 à 4, **caractérisé en ce que** la bordure du carter d'huile (10) et respectivement du couvercle est réalisée de telle façon que le carter d'huile (10) ou le couvercle peut être fixé sur le bloc moteur (30) et respectivement le carter de direction ou la transmission par un processus de formage subséquent à l'assemblage.

9. Procédé selon l'une des revendications 1 à 4, **caractérisé en ce qu'**après l'assemblage du carter d'huile (10) ou du couvercle sur le bloc moteur (30) et respectivement du carter de direction ou de la transmission, des étriers de retenue (40) sont appliqués, de façon à fixer le carter d'huile (10) ou le couvercle sur le bloc-moteur (30) et respectivement le carter de direction ou la transmission.

10. Procédé selon l'une des revendications 1 à 9, **caractérisé en ce que** les surfaces d'étanchéité (14, 36) sont formées de façon à ce que l'interstice d'étanchéité qui se forme entre elles s'agrandisse vers l'intérieur.

11. Moteur à combustion interne avec un bloc moteur (30) et un carter d'huile (10) fixé à celui-ci, une première surface d'étanchéité (14) étant prévue sur le carter d'huile (10) et une seconde surface d'étanchéité (36) étant prévue sur le bloc moteur (30), entre lesquelles se trouve une composition durcissable (20), **caractérisé en ce**
- **que** le carter d'huile (10) est fixé au bloc moteur (30) au moyen de la composition durcissable (20), dont l'adhésion, une fois durcie, est suffisamment importante pour maintenir le carter d'huile (10) sur le bloc moteur et
- **qu'** aucun boulon fileté n'est mis en place comme élément de fixation.

12. Moteur à combustion interne avec un carter de direction ou une transmission et un couvercle fixé sur ce dernier, une première surface d'étanchéité étant prévue sur le couvercle et une seconde surface d'étanchéité étant prévue sur le carter de direction ou la transmission, entre lesquelles se trouve une composition durcissable, **caractérisé en ce**
- **que** le couvercle est fixé sur le carter de direction ou la transmission au moyen de la composition durcissable, dont l'adhésion, une fois durcie, est suffisamment importante pour maintenir le couvercle sur le carter de direction ou la transmission et
- **qu'** aucun boulon fileté n'est mis en place comme élément de fixation.

13. Moteur à combustion interne selon la revendication 11 ou 12, **caractérisé en ce que** la composition (20), une fois durcie, offre une adhésion d'au moins 0,5 N/mm², en particulier supérieure à 0,8 N/mm².

14. Moteur à combustion interne selon la revendication 11, 12 ou 13, **caractérisé en ce que** la composition durcissable est une masse de silicone.

15. Moteur à combustion interne selon l'une des revendications 11, 12 ou 13, **caractérisé en ce que** le carter d'huile (10) est formé à partir de tôle d'acier ou bien en plastique et le bloc moteur est en fonte d'aluminium ou en fonte grise.

16. Moteur à combustion interne selon l'une des revendications 11 à 15, **caractérisé en ce que** la bordure du carter d'huile ou du couvercle est conçue sur le plan constructif de telle façon que, lors de l'assemblage du carter d'huile (10) ou du couvercle sur le bloc moteur (30) et respectivement sur le carter de direction ou la transmission, il se produit une fixation spontanée.

17. Moteur à combustion interne selon la revendication 16, **caractérisé en ce que** le carter d'huile (10) et respectivement le couvercle présente une bordure de fixation (16) et le bloc-moteur (30) et respectivement le carter de direction ou la transmission présente une bride (34), et que la fixation du carter d'huile (10) et respectivement du couvercle s'effectue par l'enclenchement de la bordure de fixation (16) sur la bride (34).

18. Moteur à combustion interne selon la revendication 16, **caractérisé en ce que** sur la bordure (12) du carter d'huile (10) et respectivement du couvercle sont formées des languettes (18) analogues à des barbes, lesquelles prennent appui contre une bride (34) sur le bloc moteur (30) et respectivement le carter de direction ou la transmission.

19. Moteur à combustion interne selon la revendication 16, **caractérisé en ce que** sur le carter d'huile (10) ou le couvercle et sur le bloc moteur (30) et respectivement le carter de direction ou la transmission sont prévues des surfaces d'étanchéité (14, 36), formées de façon à ce que l'interstice d'étanchéité qui formé entre elles s'agrandisse vers l'intérieur.
